(19) Europäisches Patentamt
European Patent Office
Office européen des brevets

(11) EP 4 748 733 A1

(12) EUROPÄISCHE PATENTANMELDUNG

(43) Veröffentlichungstag:
27.05.2026  Patentblatt 2026/22

(21) Anmeldenummer: 24214699.1

(22) Anmeldetag: 22.11.2024

(51) Internationale Patentklassifikation (IPC):
B65B 51/28 (2006.01)

(52) Gemeinsame Patentklassifikation (CPC):
(C-Sets verfügbar)
B65B 51/28; B29C 65/1632; B29C 65/1635;
B29C 65/1658; B29C 65/18; B29C 65/305;
B29C 65/4835; B29C 65/72; B29C 65/7894;
B29C 66/0242; B29C 66/1122; B29C 66/24244;
B29C 66/81427; B29C 66/81465; B29C 66/83;
(Forts.)

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Paul Hartmann AG
89522 Heidenheim (DE)

(72) Erfinder:
• Sprick, Ralf
89522 Heidenheim (DE)
• Frank, Bernd
89522 Heidenheim (DE)
• Schmidt, Christian
89522 Heidenheim (DE)

(74) Vertreter: Paul Hartmann AG
Patents & Licensing
Paul-Hartmann-Straße 12
89522 Heidenheim (DE)

(54) **VORRICHTUNG ZUM VERPACKEN EINES INSBESONDERE FLÄCHIG AUSGESTALTETEN MEDIZINISCHEN PRODUKTS**

(57) Die vorliegende Erfindung betrifft ein Verfahren zum Verpacken eines, insbesondere flächig ausgestalteten, medizinischen Produktes. Zwei flexible Materialbahnen und ein Produkt werden bereitgestellt. Das Produkt wird zwischen den zwei gegenüberliegenden flexiblen Materialbahnen angeordnet. Mindestens eine der Materialbahnen weist einen thermisch aktivierbaren Klebstoff auf ihrer Oberfläche auf, die der anderen Materialbahn zugewandt ist. Mindestens ein Teil einer vorgesehenen Siegelnaht wird mittels mindestens eines Lasers vorerhitzt. Die vorgesehene Siegelnaht wird mittels eines Walzenpaars um die Produkte zusammengedrückt, um die Produkte zwischen den Materialbahnen einzuschließen. Es erfolgt ein weiteres Erhitzen mindestens einer der Materialbahnen unmittelbar vor dem und/oder während des Zusammendrückens, wobei das weitere Erhitzen bevorzugt mittels mindestens einer der in dem Walzenpaar enthaltenen Andruckwalzen erfolgt.

Abbildung 1a

**(Forts. nächste Seite)**

EP 4 748 733 A1

(52) Gemeinsame Patentklassifikation (CPC): (Forts.)
**B29C 66/83413; B29C 66/83415; B29C 66/849;**
**B65B 9/02; B65B 25/00;** B29C 66/919;
B29C 66/939; B29L 2031/7128; B65B 2051/105

C-Sets
**B29C 66/8122, B29K 2821/00;**
**B29C 66/8122, B29K 2905/12**

**Beschreibung**

Die vorliegende Erfindung betrifft ein Verfahren und eine Vorrichtung zum Verpacken eines insbesondere flächig ausgestalteten medizinischen Produktes.

Im medizinischen Bereich gibt es verschiedene Arten von Wundauflagen. Häufig werden diese medizinischen Produkte einzeln kuvertförmig verpackt.

Die kuvertförmige Einzelverpackung der medizinischen Produkte erfolgt, indem die einzelnen Produkte zwischen zwei flexiblen, gegenüberliegenden flexiblen Materialbahnen eingeschlossen werden und die Materialbahnen an ihren Rändern durch Klebstoff miteinander verbunden werden. Typischerweise wird ein thermisch aktivierbarer Klebstoff verwendet, weil dieser eine stabile Versiegelung der Materialbahnen gewährleistet, so dass die Produkte vor äußeren Einflüssen geschützt sind. Dank dieser thermisch aktivierbaren Klebstoffe ist die Verpackung nach dem Öffnen nicht mehr wiederverschließbar, so dass die Gesundheits- und Hygienestandards für die Vermarktung von Pflastern oder ähnlichen Produkten eingehalten werden können. Die Verpackung kann aus zwei Bahnabschnitten aus Papier oder aus einem Bahnabschnitt aus Papier und einem Bahnabschnitt aus einem Kunststoffmaterial sowie aus zwei Bahnabschnitten aus Kunststoffmaterial bestehen. Das Kunststoffmaterial kann zum Beispiel transparent sein, wie Polyethylen. Ebenso wird oft metallisiertes Polyethylenterephthalat (PET) oder ein Aluminium-Verbundstoff als Material der Bahn verwendet. Oft bestehen die Verpackungen medizinischer Produkte aus einem Bahnabschnitt mit einer Außenfläche, auf der Informationen über das Produkt aufgedruckt sind, und aus einem Bahnabschnitt aus transparentem Kunststoffmaterial. Typischerweise ist der thermisch aktivierbare Klebstoff auf eine Innenseite einer der Materialbahnen aus Papier aufgetragen. So kann sich auf der Innenseite beispielsweise eine Klebstoffschicht befinden. Optional kann die Klebstoffschicht die Form einer vorgesehenen Siegelnaht annehmen, so dass sich der Klebstoff ausschließlich in dem zum Siegeln vorgesehenen Bereich, befindet. Die mit dem thermisch aktivierbaren Klebstoff versehene Materialbahn kann ein geschichtetes Material sein, das bereits mit einem Klebstoff versehen ist.

In Vorrichtungen und Verfahren nach dem Stand der Technik erfolgt das Verpacken der medizinischen Produkte zwischen zwei flexiblen Bahnabschnitten, indem eine fortlaufende

Anordnung von medizinischen Produkten entlang einer Stromrichtung mit Abstand zueinander vorgeschoben wird. Zwei fortlaufende flexible Materialbahnen, von denen eine mit einer Schicht aus thermisch aktivierbarem Klebstoff versehen ist, liegen einander gegenüber. Durch die Versiegelung wird eine zusammenhängende Verbundbahn gebildet, die aus den beiden flexiblen Endlosmaterialbahnen und der zwischen den beiden flexiblen Endlosmaterialbahnen eingeschlossenen kontinuierlichen Anordnung von medizinischen Produkten besteht. Die Verpackungen werden verschlossen, indem die kontinuierliche Verbundbahn durch ein erstes und ein optionales zweites Walzenpaar von üblicherweise beheizten Andruckrollen zusammengepresst werden. Häufig führt das erste Walzenpaar zwei kontinuierliche Längsschweißungen zwischen den beiden flexiblen Folien aus und das zweite Walzenpaar führt Schweißungen quer zur Stromrichtung der Verbundbahn aus. Ebenso ist es möglich die Verschweißung mit einem einzigen Walzenpaar durchzuführen. Die Richtung, in der das bahnförmige Material die Vorrichtung zum Verpacken durchläuft, wird im Folgenden als Stromrichtung bezeichnet.

Die Fixierung zwischen den beiden flexiblen Materialbahnen erfolgt durch die Aktivierung des thermisch aktivierbaren Klebstoffs, während die flexiblen Materialbahnen entlang der Kompressionslinien zusammengedrückt werden.

Anschließend werden die Verpackungen aus der kontinuierlichen Verbundbahn durch geeignete Schnitte quer zur Stromrichtung, typischerweise zwischen den Quernähten zwischen jedem Produktpaar, vereinzelt.

Die Schweißung zwischen den beiden flexiblen Materialbahnen muss vorgegebene Qualitätsanforderungen erfüllen. Die qualitativen Spezifikationen umfassen:

- in optischer Hinsicht: Es muss ein deutlicher Übergang des Klebematerials von einem Bahnabschnitt auf den gegenüberliegenden vorhanden sein und die Schweißnaht muss vollständig sein. Die Schweißnaht muss ebenso vollständig und sauber sein, ohne Verunreinigungen und ohne sichtbare Schäden. Die Farbe der Verpackungsbahnen darf sich durch das Schweißen nicht verändern und die Verpackungsbahnen dürfen durch das Schweißen nicht merklich verformt werden;

- im Hinblick auf die Versiegelung der Schweißnaht: Die Ablösekraft (Peeling) muss innerhalb eines genau quantifizierten Bereichs liegen, und beim Öffnen der Verpackung darf die Ablösekraft nicht außerhalb festgelegter Schwellenwerte zwischen den einzelnen Bereichen oder zwischen verschiedenen Verpackungen schwanken.

- unter dem Gesichtspunkt der hygienisch-sanitären Normen: Die Verpackung muss so verschweißt werden, dass sich das Produkt in einer Umgebung befindet, in der keine Verunreinigungen von außen in die Verpackung eindringen können, und dass auch gewährleistet ist, dass keine Stoffe aus dem Inneren der Verpackung austreten (eine

Dichtheitsprüfung wird durchgeführt, indem eine gefärbte Flüssigkeit in die Verpackung eingebracht und das Auslaufen von Substanzen überwacht wird). Oft handelt es sich bei der Verpackung um ein Sterilbarriere-System, welches das Produkt vor eindringenden Erregern schützt. Insbesondere wenn das Produkt nach der Herstellung in der gesiegelten Verpackung sterilisiert wird, ist die Integrität der Siegelnaht ist von großer Wichtigkeit, um die Keimfreiheit zu gewährleisten.

Eines der Hauptprobleme der Vorrichtungen und Verfahren nach dem Stand der Technik ist, dass die derzeitig maximal erreichbare Geschwindigkeit der Verpackungsanlagen in der Größenordnung von 50-60 m/min liegt. Diese Geschwindigkeitsbegrenzung ist darauf zurückzuführen, dass die Andruckwalzen mit zunehmender Geschwindigkeit der Verpackungsanlage nicht mehr in der Lage sind, den flexiblen Materialbahnen ausreichend Energie zuzuführen, um die korrekte Übertragung des Klebematerials von einer flexiblen Materialbahn auf die andere zu ermöglichen, da sich die Kontaktzeit zwischen den Andruckwalzen und den Materialbahnen proportional zur Geschwindigkeit verringert. In diesem Zusammenhang würde eine Erhöhung der Bahngeschwindigkeit der Verpackungsanlage über die Grenze von 50-60 m/min hinaus die vorgeschriebenen Qualitätsanforderungen gefährden.

Die technische Aufgabe besteht daher darin, dass ein Verfahren und eine Vorrichtung zur Verfügung gestellt werden, die ein zuverlässiges Versiegeln der Verpackung eines flächig ausgestalteten, medizinischen Produktes, insbesondere bei hoher Bahngeschwindigkeit, erlaubt.

Diese Aufgabe wird gelöst durch ein Verfahren zum Verpacken eines insbesondere flächig ausgestalteten medizinischen Produktes, umfassend die Schritte:

a. Bereitstellen zweier flexibler Materialbahnen und eines Produktes,

b. Anordnen des Produktes zwischen den zwei gegenüberliegenden flexiblen Materialbahnen, von denen mindestens diejenige Materialbahn einen thermisch aktivierbaren Klebstoff auf ihrer Oberfläche aufweist, die der anderen Materialbahn zugewandt ist,

c. Erstes Erhitzen, insbesondere Vorerhitzen, mindestens eines Teils einer vorgesehenen Siegelnaht mittels mindestens eines Lasers,

d. Zusammendrücken der vorgesehenen Siegelnaht mittels eines Walzenpaars, um das Produkt zwischen den Materialbahnen einzuschließen, sowie ein weiteres Erhitzen mindestens einer der Materialbahnen unmittelbar vor dem und/oder während des Zusammendrückens der Materialbahnen, wobei das weitere Erhitzen bevorzugt mittels mindestens einer der in dem Walzenpaar enthaltenen Andruckwalzen erfolgt.

Die Siegelnaht wird gebildet durch alle Verbindungsstellen zwischen zwei Materialbahnabschnitten, die ein medizinisches Produkt einschließen. Die vorgesehene Siegelnaht entspricht den Positionen auf den Materialbahnen, die anschließend durch die Siegelnaht verbunden werden sollen.

Das Verfahren nach Anspruch 1, das einen auf Energieeintrag durch Laserbestrahlung beruhenden ersten Erhitzungsschritt und einen weiteren finalen Erhitzungsschritt umfasst, erlaubt es daher die Bahngeschwindigkeit zu erhöhen, da es nicht mehr notwendig ist, die zur Erwärmung des Klebstoffs notwendige Energie in einer kurzen Zeit auf einmal zu übertragen. Gleichzeitig erlaubt das Verfahren die benötigte Temperatur genauer zu erreichen.

Daher ist es bei dem vorliegenden Verfahren möglich und vorteilhaft, dass die flexiblen Materialbahnen mit einer Bahngeschwindigkeit von 150 m/min bis 250 m/min, insbesondere 180 m/min bis 210 m/min, beim Zusammendrücken mittels des Walzenpaars geführt werden. Das Verfahren nach Anspruch 1 kann vorteilhaft mit einer Vorrichtung nach Anspruch 10 durchgeführt werden.

Ebenso betrifft die vorliegende Erfindung eine Vorrichtung zum Verpacken eines insbesondere flächig ausgestalteten medizinischen Produktes zwischen zwei gegenüberliegenden flexiblen Materialbahnen, umfassend:

- eine Laserheizeinheit umfassend einen Laser, der dazu ausgestaltet ist, einen thermisch aktivierbaren Klebstoff, der auf zumindest einer Oberfläche mindestens einer flexiblen Materialbahnen aufgebracht ist, zumindest teilweise an oder vor einem Walzenpaar zu erhitzen,
- das Walzenpaar, das so konfiguriert ist, dass es die Materialbahnen in einem Kompressionsbereich komprimiert, und
- mindestens eine Heizeinheit, die so konfiguriert ist, dass sie mindestens einen Teil der Materialbahn stromaufwärts von dem Walzenpaar oder an dem Walzenpaar erhitzt, wobei die Heizeinheit bevorzugt ein Teil des Walzenpaars ist.

Erfindungsgemäß erfolgt das Einschließen der Produkte also in zwei Schritten, nämlich einem ersten Erhitzen, insbesondere Vorerhitzen, und einem weiteren Erhitzen. Hierdurch kann die Prozessgeschwindigkeit gegenüber den aus dem Stand der Technik bekannten Verfahren erheblich erhöht werden.

Die Materialbahnen sind aus einem flexiblen Material. Bevorzugt handelt es sich bei diesem Material um Papier oder Kunststoff. Beispielsweise ist der Kunststoff PET, Polyvinylchlorid (PVC) oder Polyethylen (PE). Der thermisch aktivierbare Klebstoff ist zumindest auf einer der Oberflächen der Materialbahnen aufgetragen. Der thermisch aktivierbare Klebstoff kann gestrichen auf die Materialbahn aufgetragen sein, insbesondere kann eine so beschichtete, flexible Materialbahn einen Leimanteil von 14% umfassen. In einer alternativen Ausführungsform ist der thermisch aktivierbare Klebstoff in einem Gittermuster auf die Oberfläche einer der Materialbahnen aufgetragen. Die gitterbeschichtete Materialbahn weist bevorzugt einen Klebstoffanteil von 9% auf.

Durch die Verwendung des Gittermusters bleiben zwischen den Klebebereichen gasdurchlässige Bereiche frei. Diese Ausführungsform ist daher bei der Sterilisation mit Ethylenoxid zu bevorzugen. Durch den Laserstrahl wird eine vorgesehene Siegelnaht auf dieser Klebstoffbeschichtung erwärmt und damit in den adhäsiven Zustand gebracht. Der thermisch aktivierbare Klebstoff kann damit zielgenau nur an der vorgesehenen Siegelnaht erhitzt werden und das medizinische Produkt haftet nicht ungewollt an der Verpackung.

In einer Ausführungsform ist eine Oberfläche einer Materialbahn nur an den Stellen mit thermisch aktivierbarem Klebstoff beschichtet, die der vorgesehenen Siegelnaht entsprechen. Vorzugsweise ist die gesamte Oberfläche beschichtet.

Es können eine oder auch beide der Materialbahnen eine Beschichtung aus thermisch aktivierbarem Klebstoff aufweisen.

Das Quadratmetergewicht einer Materialbahn aus Papier beträgt in der Regel zwischen 40 g/m² und 100 g/m². Ist das Papier mit einem Gittermuster aus thermisch aktivierbarem Klebstoff beschichtet so hat die Materialbahn üblicherweise ein Quadratmetergewicht von 60 g/m² bis 120 g/m².

Die Materialbahnen und das unverpackte medizinische Produkt werden stromabwärts zur Vorrichtung zum Verpacken bewegt. Dort werden die medizinischen Produkte in die Materialbahnen eingeschlossen und dabei versiegelt. Danach wird die so entstehende zusammenhängende Verbundbahn bevorzugt an der mindestens einen Schneideeinheit vorbeigeführt. Mittels der Schneideeinheit werden Materialbahnen so durchtrennt, dass die medizinischen Produkte einzeln verpackt vorliegen. In einer weiter bevorzugten Ausführungsform werden die einzeln verpackten medizinischen Produkte mittels einer Sterilisationseinheit sterilisiert und/oder in einem Transportkarton verpackt.

Vor dem Einsatz des Lasers zum ersten Erhitzen der vorgesehenen Siegelnaht weist die Materialbahn und somit der Klebstoff eine Temperatur auf, welche unterhalb der Schmelztemperatur des Klebstoffs liegt. Meist beträgt die Temperatur der Materialbahn ungefähr 25°C. In der Vorrichtung zum Verpacken werden die Materialbahnen und insbesondere der Klebstoff dann über die Schmelztemperatur erhitzt.

Die vorgesehenen Siegelnähte der Materialbahnen können auf eine Temperatur von 60°C bis 100°C, bevorzugt 70°C bis 90°C, insbesondere 75°C bis 85°C erhitzt und/oder vorerhitzt werden. Insbesondere wird der thermisch aktivierbare Klebstoff, der auf der Oberfläche mindestens einer der Materialbahnen aufgetragen ist, auf 60°C bis 100°C, bevorzugt 70°C bis 90°C, insbesondere 75°C bis 85°C erhitzt und/oder vorerhitzt.

Die Temperatur des ersten Erhitzungs- und weiteren Erhitzungsprozesses wird dabei so gewählt, dass der thermische Klebstoff während des Zusammendrückens in Schritt d des Verfahrens eine Temperatur besitzt, welche über der Schmelztemperatur des thermisch aktivierbaren Klebstoffs liegt. Mittels des Anpressdrucks, der durch das Walzenpaar ausgeübt werden, werden die Materialbahnen dann vorzugsweise keimdicht versiegelt.

Hierbei ist eine Temperatur von bis zu 5°C über der Schmelztemperatur des thermisch aktivierbaren Klebstoffs besonders vorteilhaft. Insbesondere ist eine Temperatur von 80°C in Schritt d des Verfahrens vorgesehen.

Insbesondere wird eine Wärmemenge von

$$0,1 \frac{mJ}{mm^2} \text{ bis } 30 \frac{mJ}{mm^2}, \text{ bevorzugt } 1 \frac{mJ}{mm^2} \text{ bis }$$

$$20 \frac{mJ}{mm^2}, \text{ insbesondere } 1 \frac{mJ}{mm^2} \text{ bis } 15 \frac{mJ}{mm^2} \text{ in die}$$

Materialbahn bzw. den thermisch aktivierbaren Klebstoff eingebracht.

In einer Ausführungsform weisen die medizinischen Produkte eine maximale Höhe von 15 mm auf, bevorzugt 5 mm und insbesondere bevorzugt 2 mm auf. Die Höhe des medizinischen Produktes wird dabei als seine maximale Ausdehnung senkrecht zur Materialbahn bestimmt. In einer bevorzugten Ausführungsform sind die flächig ausgestalteten medizinischen Produkte Wundauflagen.

In einer bevorzugten Ausführungsform schließt die Siegelnaht das medizinische Produkt vollständig ein.

Die Siegelnaht kann zwei Längsnähte parallel zur Stromrichtung umfassen. Die Quernähte verbinden die beiden Längsnähte, so dass eine geschlossene Siegelnaht entsteht.

In einer besonders bevorzugten Ausführungsform besteht die Siegelnaht der Verpackung eines medizinischen Produktes aus einer ersten und einer zweiten Längsnähten und zwischen diesen angeordneten Quernähten, wobei die beiden Längsnähte und die Quernähte ein Rechteck bilden. Die Quernähte erstrecken sich bevorzugt senkrecht zur Stromrichtung und die Längsnähte parallel zur Stromrichtung. Ebenso kann vorgesehen sein, dass die Siegelnaht so ausgestaltet ist, dass zwei oder mehr medizinische Produkte senkrecht zur Stromrichtung nebeneinander versiegelt werden können.

Die Materialbahnen werden bevorzugt in einem in einem Winkel bis 90° zusammengeführt, wobei der Winkel bevorzugt höchstens 60°, insbesondere höchstens 30° beträgt.

Der Winkel zwischen den Materialbahnen ist dabei abhängig von der Anordnung des Lasers und von der Anordnung des Walzenpaars.

Der Laser kann während des Vorheizens in einer bestimmten Position fixiert sein, so dass der Laserstrahl sich während des Siegelvorgangs nicht bewegt. Mittels des Lasers wird der Klebstoff entlang mindestens eines Teils der vorgesehenen Siegelnaht, die der anderen Materialbahn zugewandt ist, erwärmt. Vorzugsweise wird der Laser ausgeschaltet, wenn keine vorgesehene Siegelnaht der flexiblen Materialbahn vom Laserstrahl bestrahlt werden würde. Hierzu kann ein gepulster Laser verwendet werden. Bei dieser Ausführungsform wird ermöglicht, dass nur die vorgesehene Siegelnaht erwärmt wird und keine Energie an ungewünschten Stellen auf der Materialbahn übertragen wird.

In einer weiteren Ausführungsform wird der Laserstrahl auf eine vorbestimme Position fixiert, beispielsweise indem der Laser auf diese vorherbestimmte Position ausgerichtet ist. Es kann eine Maske verwendet werden, welche über der Materialbahn angebracht und für den Laserstrahl teilweise durchlässig ist. Die Maske ist so konfiguriert, dass die Materialbahn und der thermisch aktivierbare Klebstoff nur entlang der vorgesehenen Siegelnaht bestrahlt wird. So wird ausschließlich die vorgesehene Siegelnaht erwärmt. In dieser Ausführungsform überstreicht der Laserstrahl bevorzugt die gesamte Breite der Materialbahn. Dies kann durch eine Ausweitung des Laserstrahls mittels optischer Elemente, wie Linsen, Prismen und/oder Spiegeln, erreicht werden. Der Laser kann ebenfalls gepulst sein. Ebenso kann die Maske so ausgestaltet sein, dass die Materialbahn und der thermisch aktivierbare Klebstoff nur entlang eines Teils der vorgesehenen Siegelnaht bestrahlt wird. Beispielsweise kann die Maske nur eine Bestrahlung entlang der vorgesehenen Längsnähte oder der vorgesehenen Quernähte erlauben.

In einer alternativen Ausführungsform kann der Laserstrahl während des Vorheizens der vorgesehenen Siegelnaht in einem ersten Heizbereich folgen. Der Laser kann hierzu so ausgestaltet sein, dass er der vorgesehenen Siegelnaht folgen kann und/oder es werden weitere geeignete optische Elemente verwendet, um den Laserstrahl des Lasers umzulenken.

Bevorzugt kann die Leistung des Lasers auf die Kontur der vorgesehenen Siegelnaht abgestimmt werden. Besonders bevorzugt ist die Leistung des Lasers abgestimmt auf die Ausbreitung der vorgesehenen Siegelnaht senkrecht zur Stromrichtung, welche von dem Laserstrahl überstrichen wird. Hierbei kann die Laserleistung erhöht werden, wenn die vorgesehene Siegelnaht senkrecht zur Stromrichtung breiter ist, d.h. die Laserleistung muss ihren maximalen Wert annehmen, wenn die vorgesehene Siegelnaht die vollständige Breite der Materialbahn einnimmt. Die Laserleistung ist geringer als dieser maximale Leistungswert, wenn der zu erhitzende Bereich der vorgesehenen Siegelnaht nicht die gesamte Breite der Materialbahn einnimmt. Bevorzugt wird dabei der Laserstrahl aufgeweitet, wenn ein Teil der Kontur mit größerer Breite überstrichen wird und besonders bevorzugt wird die Leistung des Lasers dabei so erhöht, dass die Flächenleistung konstant über die gesamte vorgesehene Siegelnaht ist.

Für eine einzelne Verpackung kann daher die Leistung des Lasers zunächst erhöht werden, wenn der Laserstrahl auf die erste vorgesehene Quernaht trifft. Danach wird die Leistung des Lasers reduziert, um die beiden vorgesehenen Längsnähte zu erwärmen um anschließend wieder die Leistung des Lasers zu erhöhen, um die zweite vorgesehene Quernaht der Verpackung zu bestrahlen.

In einer möglichen Ausführungsform sind die Andruckwalzen so konfiguriert, dass sie die flexiblen Materialbahnen entlang der vorgesehenen Siegelnaht zusammenpressen, so dass sie jeweils ein medizinisches Produkt einschließen. Eine der beiden Andruckwalzen kann an ihrer Außenfläche Kompressionsbereiche mit einer abgeschlossenen Form aufweisen, die dazu bestimmt ist, die Materialbahnen um das jeweilige medizinische Produkt herum zusammenzupressen. Die Kompressionsbereiche weisen dabei bevorzugt Ausbuchtungen in Form der vorgesehenen Siegelnaht auf. Die vorgesehene Siegelnaht folgt dabei bevorzugt dem Umfang der Verpackung.

Die Andruckrollen umfassen mindestens eine Heizeinheit, die so konfiguriert ist, dass sie mindestens eine der flexiblen Materialbahnen vor und/oder während des Zusammenpressens im Kompressionsbereich erwärmt.

In einer bevorzugten Ausführungsform umfasst das Walzenpaar eine erste Andruckwalze mit einem oder mehreren vorstehenden Kompressionsbereichen aus weichem Material und eine zweite Andruckwalze aus hartem Material. Die eine oder die mehreren vorstehenden Kompressionsbereiche der ersten Andruckwalze bestehen vorzugsweise aus einem Elastomer, wie beispielsweise Silikon. Die zweite Andruckwalze besteht bevorzugt aus Stahl.

In einer bevorzugten Ausführungsform ist der Laser so angeordnet, dass der Laserstrahl im Wesentlichen senkrecht zur Oberfläche der Materialbahn ausgerichtet ist, welche den thermisch aktivierbaren Klebstoff aufweist. Durch eine senkrechte Ausrichtung des Laserstrahls zur zu bestrahlenden Fläche wird ein möglichst großer Energieeintrag erreicht.

In einer ersten Ausführungsform kann der Laser so angeordnet sein, dass der Laserstrahl den thermisch aktivierbaren Klebstoff direkt bestrahlen kann.

In einer zweiten Ausführungsform kann mindestens eine der Materialbahnen zumindest teilweise transparent für den Laserstrahl sein und der Laser ist so angeordnet, dass der Laserstrahl durch diese Materialbahn hindurch auf den thermisch aktivierbaren Klebstoff trifft. Der thermisch aktivierbare Klebstoff kann dabei auf der vom Laser abgewandten Seite der teilweise transparenten Materialbahn angeordnet sein oder auf der zweiten Materialbahn angeordnet sein.

Der Laserstrahl kann dabei mittels geeigneter optischer Elemente, wie Spiegel, zwischen dem Laser und zu bestrahlender Fläche umgelenkt werden. Dies ermöglicht eine flexiblere Anordnung des Lasers.

In der ersten Ausführungsform ist der Laser zwischen den beiden Materialbahnen angeordnet oder der Laserstrahl wird zwischen die beiden Materialbahnen gelenkt. Insbesondere, wenn der Laser zwischen den beiden Materialbahnen angeordnet ist, wird ein größerer Winkel zwischen den beiden Materialbahnen gewählt.

Der Laserstrahl kann auf beide Materialbahnen auftreffen, wenn diese zusammengeführt werden. Dies kann während des Zusammendrückens der beiden Materialbahnen im Bereich des Walzenpaares geschehen oder an einem zweiten Führungswalzenpaar, welches die beiden Materialbahnen stromaufwärts vor dem Walzenpaar zusammenführt.

Bei der ersten Ausführungsform ist besonders darauf zu achten, dass die Materialbahn, welche die medizinischen Produkte trägt, im Wesentlichen senkrecht zur Schwerkraft ausgerichtet ist, damit die medizinischen Produkte nicht während des Siegelungsprozesses verrutschen und innerhalb der durch die vorgesehene Siegelnaht eingeschlossenen Fläche bleiben.

Bevorzugt wird in der zweiten Ausführungsform ein kleinerer Winkel, d. h. kleiner als 30°, zwischen den beiden Materialbahnen gewählt. Auch hier sollte die Materialbahn, welche die medizinischen Produkte trägt, im Wesentlichen senkrecht zur Schwerkraft ausgerichtet sein.

In der ersten und der zweiten Ausführungsform kann die Vorrichtung um mindestens einen zweiten Laser ergänzt werden, so dass die Laserheizeinheit mindestens zwei Laser umfasst, die dazu ausgestaltet sind, den thermisch aktivierbaren Klebstoff vorzuerhitzen.

Statt zweier Laser kann auch der Laserstrahl eines einzigen Lasers in zwei Teilstrahlen aufgespalten werden. Diese Teilstrahlen können verwendet werden, um den thermisch aktivierbaren Klebstoff vorzugsweise an zwei unterschiedlichen Stellen vorzuerhitzen.

In einer Ausführungsform sind die zwei Laser nahe an den jeweiligen Flächen der Materialbahnen angeordnet, die den Flächen gegenüberliegen, die den medizinischen Produkten zugewandt sind.

Die verwendete Laserleistung wird dabei vor allem an das Quadratmetergewicht der Materialbahnen und das Quadratmetergewicht des thermisch aktivierbaren Klebstoffs angepasst. Des Weiteren ist die verwendete Laserleistung unter anderem von der spezifischen Wärme des Materials der Materialbahnen und des thermisch aktivierbaren Klebstoffs abhängig. Eine Rolle für die Bestimmung der Laserleistung spielt auch die Zieltemperatur nach dem ersten Erhitzen mittels Laser. Hierbei ist vor allem die Temperaturdifferenz zwischen der Temperatur der Materialbahnen vor dem Erhitzen mittels Laser und der Zieltemperatur relevant.

Die Erfindung betrifft auch ein System umfassend zwei erfindungsgemäße Vorrichtungen, wobei die erste Vorrichtung eine erste Laserheizeinheit, ein erstes Walzenpaar und eine erste Heizeinheit umfasst und wobei die zweite Vorrichtung eine zweite Laserheizeinheit, ein zweite Walzenpaar und eine zweite Heizeinheit umfasst.

Die erste und die zweite Laserheizeinheit umfasst einen Laser, der dazu ausgestaltet ist, einen thermisch aktivierbaren Klebstoff, der auf zumindest einer Oberfläche mindestens einer der flexiblen Materialbahnen aufgebracht ist, zumindest teilweise an oder vor dem ersten bzw. zweiten Walzenpaar zu erhitzen. Alternativ kann anstelle zweier Laser auch der Laserstrahl eines einzigen Lasers in zwei Teilstrahlen aufgespalten werden, um so gleichzeitig als Laser der ersten Laserheizeinheit und als Laser der zweiten Laserheizeinheit zu fungieren. Das erste und das zweite Walzenpaar ist so konfiguriert, dass sie die Materialbahnen in dem ersten bzw. dem zweiten Kompressionsbereich komprimiert. Die erste und die zweite Heizeinheit ist so konfiguriert, dass sie mindestens einen Teil der Materialbahn stromaufwärts von dem ersten bzw. dem zweiten Walzenpaar oder an diesem Walzenpaar erhitzt. Die erste und die zweite Heizeinheit sind vorzugsweise ein Teil des jeweiligen Walzenpaars.

Die erste Vorrichtung ist stromaufwärts von der zweiten Vorrichtung angeordnet. Die erste Vorrichtung erzeugt bevorzugt eine Längsnaht. Die Längsnaht ist der Teil der Siegelnaht, der im Wesentlichen parallel zur Stromrichtung verläuft. Es werden zwei flexible Materialbahnen und ein Produkt bereitgestellt. Mindestens eine der Materialbahnen weist einen thermisch aktivierbaren Klebstoff auf. Das Produkt wird zwischen den zwei gegenüberliegenden flexiblen Materialbahnen eingeschlossen. Dabei wird der Teil der vorgesehenen Siegelnaht, der im Wesentlichen parallel zur Stromrichtung verläuft, mittels der ersten Laserheizeinheit erhitzt. Die beiden Materialbahnen werden mittels des ersten Walzenpaars, insbesondere entlang dieser vorgesehenen Längsnaht, zusammengedrückt, um die Produkte zwischen den Materialbahnen einzuschließen. Die Andruckwalze des ersten Walzenpaars weist bevorzugt Ausbuchtungen in Form der vorgesehenen Längsnaht auf. Auch werden die Materialbahnen unmittelbar vor dem und/oder während des Zusammendrückens der Materialbahnen mittels der ersten Heizeinheit weiter erhitzt.

Das so eingeschlossene Produkt wird der zweiten Vorrichtung bereitgestellt. Die zweite Vorrichtung erzeugt bevorzugt eine Quernaht. Als Quernaht werden alle Teile der Siegelnaht bezeichnet, die nicht im Wesentlichen parallel zur Stromrichtung verlaufen. Die Quernaht kann beispielsweise senkrecht zur Stromrichtung verlaufen. Die Quernaht kann aber auch aus zwei von den Längsnähten ausgehenden Linien bestehen, die in einem Punkt zusammenlaufen bestehen. Die Quernaht kann ebenfalls eine abgerundete Form ausweisen. Bevorzugt werden die Teile der vorgesehenen Siegelnaht, die noch nicht versiegelt wurden, mittels des Lasers der zweiten Laserheizeinheit erhitzt. Die beiden Materialbahnen werden dann mittels des zweiten Walzenpaars, insbesondere entlang der vorgesehenen Quernaht, zusammengedrückt. Die Andruckwalze des zweiten Walzenpaars weist bevorzugt Ausbuchtungen in Form der vorgesehenen Quernaht auf. Auch werden die Materialbahnen unmittelbar vor dem und/oder während des Zusammendrückens der Materialbahnen mittels der zweiten Heizeinheit weiter erhitzt. Durch den zweiten Siegelschritt der zweiten Vorrichtung wird die Siegelnaht vervollständigt, so dass die Siegelnaht bevorzugt eine abgeschlossene Form aufweist.

Alternativ kann die erste Vorrichtung die Quernaht siegeln und die zweite Vorrichtung führt die Siegelung der Längsnaht durch.

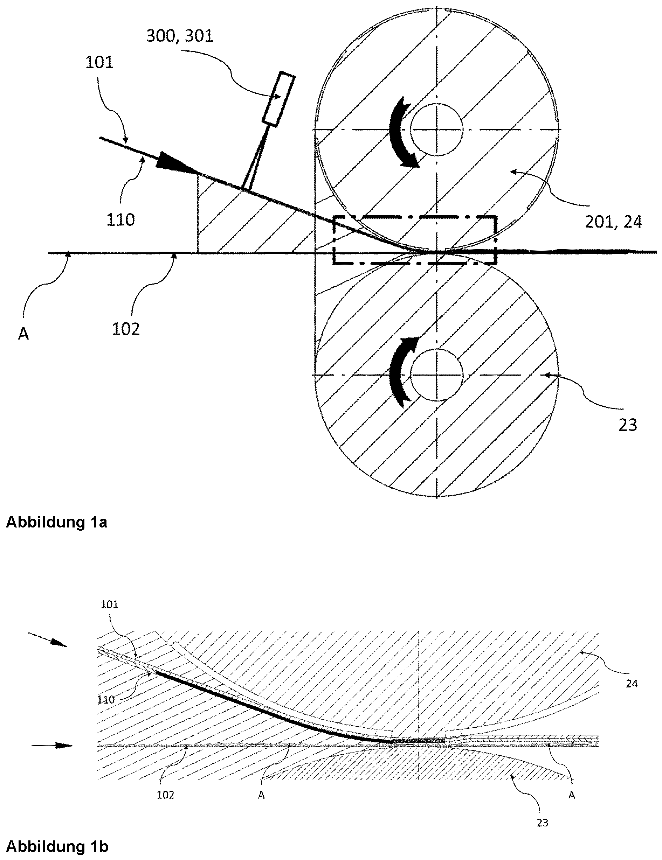

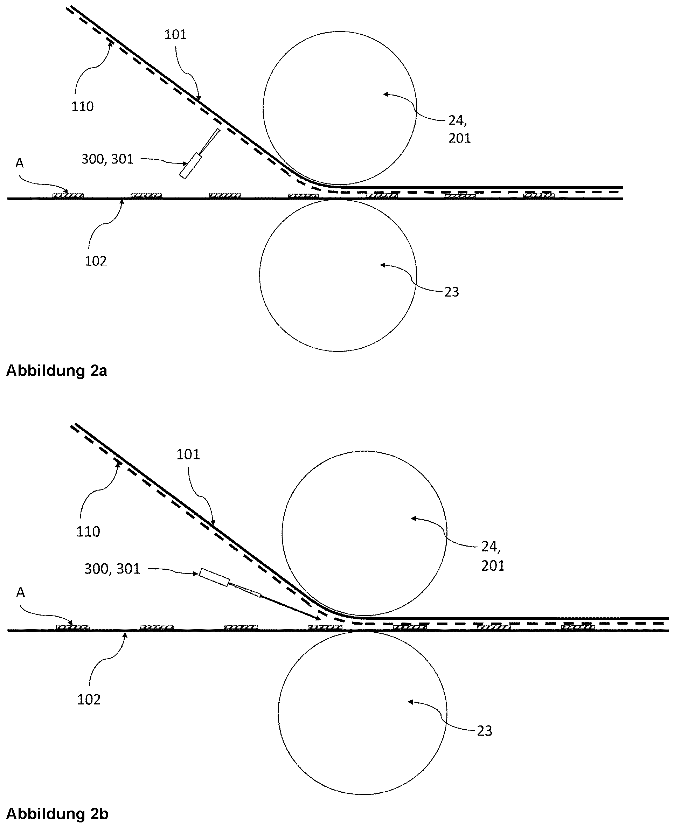

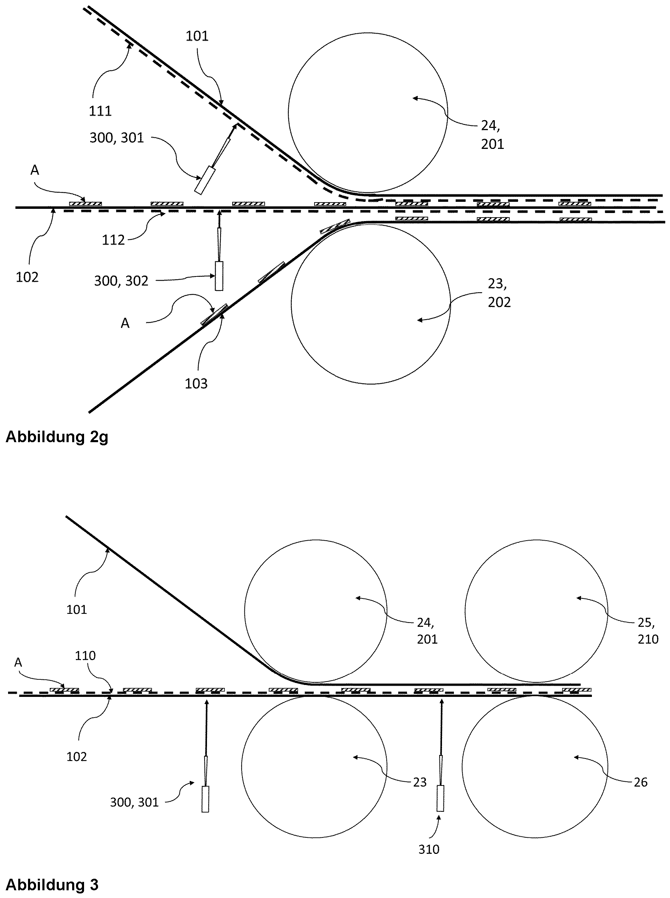

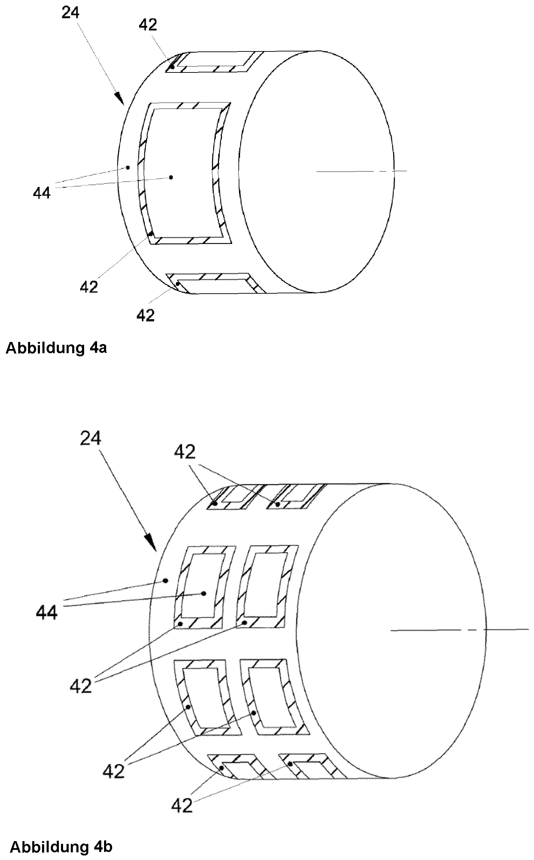

Abbildung 1a: Schematische Darstellung einer Ausführungsform der Erfindung Abbildung 1b: Detail der schematischen Darstellung einer Ausführungsform der Erfindung Abbildung 2a bis 2g: Verschiedene beispielhafte Ausführungsformen der Erfindung, welche eine Reihe vorteilhafter Anordnungen des oder der Laser aufzeigen Abbildung 3: Schematische Darstellung eines Systems umfassend 2 Walzenpaare und zwei Laserheizeinheiten Abbildung 4a und 4b: Schematische Darstellung einer Andruckwalze des Walzenpaars

Abbildung 1a zeigt eine Ausführungsform der Vorrichtung zum Verpacken von insbesondere flächig ausgestalteten medizinischen Produkten A. Die Abbildung 1b zeigt einen detaillierteren Ausschnitt der Abbildung 1a im Bereich des Walzenpaars 23, 24.

Die verwendeten Materialbahnen 101 und 102 sind aus Paper und/oder Kunststoff. Beispielsweise ist die in Abbildung 1a dargestellte untere Materialbahn 102 aus Papier und die obere Materialbahn 101, welche den thermisch aktivierbaren Klebstoff 110 trägt, aus Kunststoff. Der thermisch aktivierbare Klebstoff 110 ist in der Regel vollflächig auf eine Seite der Materialbahn 101 aufgetragen. Die obere Materialbahn 101 ist für den Laserstrahl optisch durchlässig.

Bei den zu verpackenden medizinischen Produkten A kann es sich beispielsweise um eine Wundauflage handeln.

Die Vorrichtung umfasst einen Laser 301 als eine Laserheizeinheit 300. Mittels des Lasers 301 wird der thermisch aktivierbare Klebstoff 110, der auf einer Oberfläche einer flexiblen Materialbahn 101 aufgebracht ist, entlang einer vorgesehenen Siegelnaht erwärmt. Die Oberfläche der Materialbahn 101, welche den thermisch aktivierbaren Klebstoff 110 trägt, ist der anderen Materialbahn 102 zugewandt. Diese Materialbahn wird unter einem Winkel von ca. 30° mit einer zweiten Materialbahn 102 im Bereich des Walzenpaars 23, 24 zusammengeführt. Die zweite Materialbahn 102 trägt die zu verpackenden Wundauflagen A. Die Wundauflagen werden zwischen den flexiblen Materialbahnen 101, 102 eingeschlossen.

Stromabwärts von der Laserheizeinheit 300 ist die Heizeinheit 201 angeordnet. Mittels dieser wird der thermisch aktivierbare Klebstoff 110 ebenfalls erwärmt. Diese Heizeinheit 201 ist Teil des Andruckwalzenpaars 23, 24. Die Andruckwalze 24 wird erhitzt und erwärmt die Materialbahn 101 und insbesondere den thermisch aktivierbaren Klebstoff in dem Bereich, in dem die obere Materialbahn 101 an der erhitzten Andruckwalze 24 entlanggeführt wird. Da der thermisch aktivierbare Klebstoff schon im ersten Erhitzungsschritt c erhitzt wurde, muss nicht mehr die komplette Energie mittels der Andruckwalze auf den Klebstoff übertragen werden, um die für den Versiegelungsschritt d notwendige Temperatur ausgehend von der Raumtemperatur zu erreichen. Dies ermöglicht eine zuverlässigere Versiegelung der Wundauflagen auch bei hohen Bahngeschwindigkeiten, wie 200 m/min. Ebenso wird die Wahrscheinlichkeit von Materialschaden durch zu hohe Temperaturen oder unsichere Sterilbarrieren durch unterbrochene Siegelnähte bei zu niedrigen Temperaturen verhindert. Ein weiterer Vorteil ist, dass der Materialverschleiß des Walzenpaars, insbesondere wenn eine der Walzen mit einem Elastomer beschichtet ist, abnimmt, da die Andruckwalzen mit geringeren Temperaturen betrieben werden können.

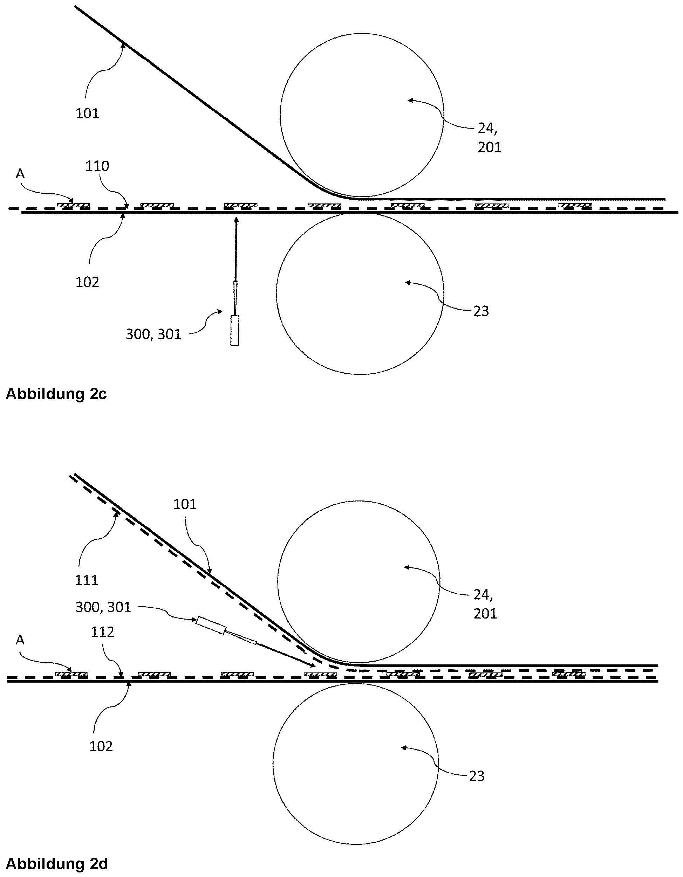

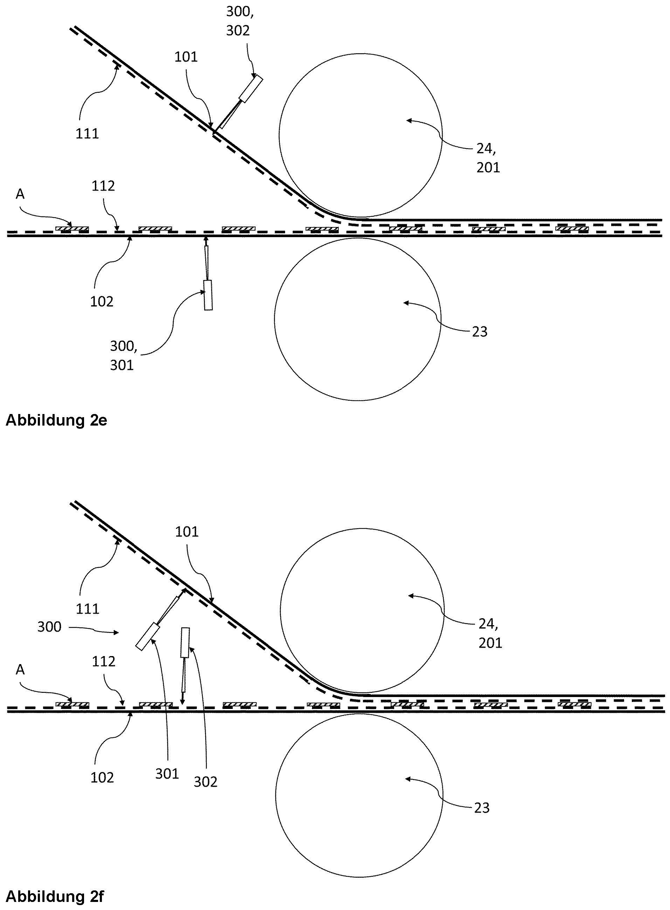

Es ist eine Vielzahl von Anordnungsmöglichkeiten der Laserheizeinheit 300 mit Laser 301 zur dem Walzenpaar 23, 24 mit Heizeinheit 201 denkbar. Für diese Varianten soll auf Abbildung 2 verwiesen werden.

Durch die erwärmte Andruckwalze 24, deren Oberfläche Ausbuchtungen in Form der vorgesehenen Siegelnaht aufweist, wird die vorgesehene Siegelnaht gezielt erwärmt.

Mittels des Walzenpaars 23, 24 werden die Materialbahnen 101, 102 in den Kompressionsbereichen komprimiert. Durch die Ausbuchtungen werden die Materialbahnen 101, 102 insbesondere an der vorgesehenen Siegelnaht zusammengepresst. Dieser Anpressprozess wird noch einmal im Detail in Abbildung 1b dargestellt.

Die Abbildungen 2a bis 2g zeigen beispielhafte Ausführungsformen für die Anordnung der Laserheizeinheit 300 mit Laser 301 zu dem Walzenpaar 23, 24 mit Heizeinheit 201.

Die angeführten Ausführungsformen sind beispielhaft und keinesfalls erschöpfend zu verstehen. Statt der Anordnung des Lasers selbst kann beispielsweise auch der Laserstrahl eines Lasers zu den entsprechenden Stellen auf der vorgesehenen Siegelnaht umgelenkt werden, um diese aus der entsprechenden Richtung zu bestrahlen.

In den in Abbildung 2a und 2b dargestellten Ausführungsform werden eine erste Materialbahn 101 und eine zweite Materialbahn 102 bereitgestellt. Dabei ist eine Oberfläche der ersten Materialbahn 101 mit thermisch aktivierbarem Klebstoff 110 beschichtet. Diese Oberfläche ist der zweiten Materialbahn 102 zugewandt. Die erste Materialbahn 101 wird nach oder während der Bestrahlung durch den Laserstrahl des Lasers 301 an einer Andruckwalze 24 des Walzenpaars entlanggeführt. Die zweite Materialbahn 102 ist im Wesentlichen senkrecht zur Schwerkraft ausgerichtet. Die Oberfläche der zweiten Materialbahn 102, welche der ersten Materialbahn 101 zugewandt ist, trägt die medizinischen Produkte A. Im Vorheizprozess und im Heizprozess muss daher der thermisch aktivierbare Klebstoff 110, insbesondere der auf der Materialbahn 101 befindliche Klebstoff, erwärmt werden. Im Vorheizprozess wird der Klebstoff 110 mittels des Lasers 301 erwärmt und während des weiteren Heizprozesses mittels der Heizeinheit 201, welche in einer Andruckwalze 24 des Walzenpaars 23, 24 vorhanden ist. Im Kompressionsbereich des Walzenpaars 23, 24 werden die beiden Materialbahnen 101, 102 um das medizinische Produkt A herum versiegelt.

In Abbildung 2a ist der in der Laserheizeinheit 300 enthaltene Laser 301 zwischen den Materialbahnen 101, 102 so angeordnet, dass der Laserstrahl zwischen den beiden Materialbahnen den thermisch aktivierbaren Klebstoff 110 direkt erhitzt, ohne zuvor eine Materialbahn zu durchdringen. In einer bevorzugten Ausführungsform ist auch der Laser 301 zwischen den beiden Materialbahnen 101, 102 angeordnet. Nach dem ersten Erhitzen des thermisch aktivierbaren Klebstoffs mittels des Laserstrahls wird der Klebstoff abermals durch die Heizeinheit 201 des Walzenpaars 23, 24 erhitzt.

In Abbildung 2b ist der Laser 301 zwischen den Materialbahnen 101, 102 so angeordnet, dass der Laserstrahl zwischen den beiden Materialbahnen den thermisch aktivierbaren Klebstoff 110 direkt erhitzt, ohne zuvor eine Materialbahn zu durchdringen. Der Laser 301 ist unmittelbar zwischen den beiden Materialbahnen 101, 102 angeordnet. Während des Erhitzens des thermisch aktivierbaren Klebstoffs mittels des Laserstrahls wird der Klebstoff auch durch die Heizeinheit 201 des Walzenpaars 23, 24 erhitzt.

Abbildung 2c zeigt eine Ausführungsform der Erfindung, in der der thermisch aktivierbare Klebstoff 110 auf der zweiten Materialbahn 102 aufgebracht ist. Die erste Materialbahn 101 ist nicht mit einem Klebstoff beschichtet. Die mit Klebstoff 110 beschichtete Oberfläche ist der ersten Materialbahn 101 zugewandt und auf dieser Oberfläche der zweiten Materialbahn 102 sind die medizinischen Produkte A angeordnet. Die zweite Materialbahn 102 ist daher im Wesentlichen senkrecht zur Schwerkraft ausgerichtet. Der Laser 301 ist so angeordnet, dass der Laserstrahl senkrecht zur zweiten Materialbahn 102 auf der dem Klebstoff 110 abgewandten Seite auftrifft. Der Laserstrahl durchdringt die zweite Materialbahn 102, und erhitzt den thermisch aktivierbaren Klebstoff 110.

In den in Abbildung 2d bis 2e dargestellten Ausführungsformen werden jeweils eine erste Materialbahn 101 und eine zweite Materialbahn 102 bereitgestellt, wobei je eine Oberfläche der ersten Materialbahn 101 mit einem thermisch aktivierbarem Klebstoff 111 und eine Oberfläche der zweiten Materialbahn 102 mit einem thermisch aktivierbarem Klebstoff 112 beschichtet ist. Diese beiden Oberflächen sind einander zugewandt. Die zweite Materialbahn 102 ist im Wesentlichen senkrecht zur Schwerkraft ausgerichtet. Die Oberfläche der zweiten Materialbahn 102, welche der ersten Materialbahn 101 zugewandt ist, trägt die medizinischen Produkte A. Im Vorheizprozess und im Heizprozess müssen daher die Oberflächen beider Materialbahnen 101, 102, insbesondere der thermisch aktivierbare Klebstoff 111, 112, erwärmt werden. Im Vorheizprozess wird der Klebstoff 111, 112 mittels der Laser 301, 302 erhitzt und anschließend während des finalen Heizprozesses mittels der Heizeinheit 201 in einer Andruckwalze 24 des Walzenpaars. In einer alternativen Ausführungsform können auch beide Andruckwalzen 23, 24 eine Heizeinheit umfassen.

Wie in Abbildung 2c ist in Abbildung 2d der Laser 301 so angeordnet, dass dessen Laserstrahl den Klebstoff 111, 112, der auf den einander zugewandten Oberflächen der beiden Materialbahnen 101, 102 aufgebracht ist, direkt erhitzt. Der Laserstrahl trifft dabei im Wesentlichen an der Stelle auf die beiden Materialbahnen 101, 102, an denen diese im Kompressionsbereich des Walzenpaares 23, 24 zusammentreffen. In dieser Ausführungsform genügt ein Laser bzw. ein Laserstrahl um beide Schichten des thermisch aktivierbaren Klebstoffs 111, 112 zu erhitzen. Dadurch wird der Klebstoff 111, 112 nicht nur durch den Laser 301 der Laserheizeinheit 300, sondern gleichzeitig durch die Heizeinheit 201 des Walzenpaars 23, 24 erhitzt. In einer bevorzugten Ausführungsform ist auch der Laser 301 zwischen den beiden Materialbahnen 101, 102 angeordnet.

Auch die Abbildung 2e zeigt eine Ausführungsform der Erfindung umfassend eine Laserheizeinheit 300 umfassend zwei Laser 301, 302 oder einen Laser, welcher mittels optischer Aufspaltung zwei Laserstrahlen emittieren kann, wie weiter oben bereits näher ausgeführt (nicht dargestellt). Die Laserstrahlen treffen einmal auf die erste Materialbahn 101 und einmal auf die zweite Materialbahn 102. Die erste und die zweite Materialbahn 101, 102 sind für die Laserstrahlen optisch durchlässig, so dass der thermisch aktivierbare Klebstoff 111, 112 erhitzt werden kann. Danach werden die Materialbahnen 101, 102 im Bereich des Walzenpaars 23, 24 zusammengeführt und durch die Heizeinheit 201 erhitzt. Das Walzenpaar 23, 24 kann auch zwei Heizeinheiten umfassen, wobei in jeder Andruckwalze eine Heizeinheit angeordnet ist. z

In Abbildung 2f sind, ähnlich wie in Abbildung 2a, die Laser so eingerichtet, dass die Laserstrahlen direkt auf die beiden mit thermisch aktivierbarem Klebstoff 111, 112 beschichteten Oberflächen der Materialbahnen 101, 102 treffen. Obwohl diese Ausführungsform strukturell aufwendiger ist, als die in Abbildung 2d dargestellte Ausführungsform mit einem Laserstrahl zwischen den Materialbahnen 101, 102, ermöglicht diese Ausführungsform eine genauere Kontrolle der Laserstrahlen und der von ihnen übertragenen Energiemenge. Damit kann eine genauere Siegelnaht erreicht werden.

In Abbildung 2g zeigt eine Ausführungsform der Erfindung zum Verpacken von zwei medizinischen Produkten A übereinander. Drei Materialbahnen 101, 102, 103 werden dem Walzenpaar 23, 24 zugeführt. Zwischen je zwei Materialbahnen 101, 102, 103 sind die Produkte A angeordnet. Eine Schicht des thermisch aktivierbaren Klebstoffs 111, 112 ist zwischen je zwei aneinander liegenden Materialbahnen aufgebracht. Der Winkel zwischen den beiden Materialbahnen 102, 103 wird dabei so gewählt, dass die Produkte A nicht verrutschen können. Mindestens eine Andruckwalze 23, 24 des Walzenpaars umfasst eine Heizeinheit 201, 202. In dieser Ausführungsform können aber auch beide Andruckwalzen 23, 24 eine Heizeinheit 201, 202 umfassen. Die Laser 301, 302 sind so zwischen je zwei Materialbahnen 101, 102, 103 angeordnet, dass der Laserstrahl zwischen den Materialbahnen den thermisch aktivierbaren Klebstoff 111, 112 direkt erhitzt, ohne zuvor eine Materialbahn zu durchdringen.

Alternativ sind hier auch andere Anordnungen der Laser nach einer der vorigen Ausführungsformen oder einer Kombination der Anordnungen der Laser nach einer der vorigen Ausführungsformen möglich.

Unter Berücksichtigung der Abmessungen üblicher Lasermodule 301 kann es aus konstruktiven Gründen sinnvoll sein, den Laser 301 nicht unmittelbar im Bereich des Walzenpaars anzuordnen. Stattdessen kann die Laserheizeinheit 300 weitere geeignete optische Elemente umfassen, um den Laserstrahl so umzulenken, dass der Laserstrahl die zu bestrahlende Oberfläche der Materialbahnen 101, 102 erreicht. Bei diesen optischen Elementen kann es sich beispielsweise um einen oder mehrere Spiegel handeln. Eine derart durch optische Elemente erreichte Führung des Laserstrahls erlaubt es bei einer erfindungsgemäßen Vorrichtung, die räumliche Anordnung der Laserquelle 301 völlig unabhängig von dem Auftreffpunkt des Laserstrahls vorzusehen.

Mittels der Spiegel kann ein weiter entfernter Laserstrahl beispielsweise zwischen die Materialbahnen gelenkt werden, so dass der Laserstrahl, wie in Abbildung 2a dargestellt, zwischen den Materialbahnen 101, 102 direkt auf die Schicht aus Klebstoff 110 strahlt.

Der Winkel, in welchem die beiden Materialbahnen 101, 102 aufeinandertreffen, kann unter Berücksichtigung der Anordnung und der Größe der in diesem Bereich vorgesehenen Komponenten ausgewählt werden. Beispielsweise ist bei einer Anordnung, bei der der Laserstrahl direkt auf eine Schicht aus Klebstoff trifft, ohne zuvor durch eine Materialbahn zu dringen, ein kleinerer Winkel zwischen den Materialbahnen möglich, wenn statt des Lasers 301 nur eine optische Komponente, welche kleiner als der Laser ist, zwischen Materialbahnen angeordnet wird, um den Strahl an die gewünschte Stelle zu lenken.

Wichtig bei der Wahl der Anordnung ist, dass der Vorheizschritt so zeitnahe am Heiz- und Zusammendrückschritt d liegt, dass der durch den Laser erhitze Klebstoff nicht vollständig abkühlt. Für derartige Anordnungen ist deswegen ein Abstand zwischen dem Auftreffpunkt des Laserstrahls des Laserheizeinheit 300 auf der Materialbahn und des Kompressionsbereiches des Walzenpaars von 1 cm bis 20 cm vorgesehen.

Abbildung 3 zeigt ein System umfassend eine erste Vorrichtung mit einer ersten Laserheizeinheit 300, einem ersten Walzenpaar 23, 24 und einer ersten Heizeinheit 201, sowie einer zweiten Vorrichtung mit einer zweiten Laserheizeinheit 310, einem zweiten Walzenpaar 25, 26 und einer zweiten Heizeinheit 210. Die erste und die zweite Heizeinheit 201, 210 sind Teil des ersten bzw. des zweiten Walzenpaars.

Die vorgesehene Siegelnaht wird in zwei Schritten gesiegelt. Die Längsnaht wird mittels der ersten Vorrichtung gesiegelt, die Quernaht mittels der zweiten Vorrichtung.

Die erste Vorrichtung ist daher stromaufwärts zu der zweiten Vorrichtung angeordnet. Es werden zwei flexible Materialbahnen 101, 102 und ein Produkt A bereitgestellt und der ersten Vorrichtung zugeführt. Die beiden Materialbahnen 101, 102 schließen das Produkt A, welches insbesondere ein flächig ausgestaltetes Medizinprodukt ist, ein. Die Materialbahn 102, die die Produkte A trägt, ist mit einem thermisch aktivierbaren Klebstoff 110 beschichtet. Die erste Laserheizeinheit 300 erhitzt die vorgesehene Längsnaht mittels eines Lasers 301. Anschließend werden die beiden Materialbahnen 101, 102 mittels des ersten Walzenpaars 23, 24 entlang der vorgesehenen Längsnaht zusammengedrückt. Eine der beiden Walzen des ersten Walzenpaars 23, 24 umfasst dabei eine Oberfläche aus einem Elastomer mit mehreren vorstehenden Kompressionsbereichen, die der vorgesehenen Längsnaht folgen. Die andere Walze des ersten des ersten Walzenpaars 23, 24 ist aus Stahl. Auch werden die Materialbahnen 101, 102 während des Zusammendrückens mittels der ersten Heizeinheit 201 weiter erhitzt.

Nach der ersten Vorrichtung sind die Produkte A teilweise versiegelt. Der komplementäre Teil der vorgesehenen Siegelnaht wird durch die zweite Vorrichtung verschweißt.

Dabei wird das so teilweise eingeschlossene Produkt A an die zweite Vorrichtung weitergeleitet. Die Materialbahnen werden mittels der zweiten Laserheizeinheit 310 weiter erhitzt. Die beiden Materialbahnen 101, 102 werden dann mittels des zweiten Walzenpaars 25, 26 entlang der vorgesehenen Quernaht zusammengedrückt. Ein der Walzen des zweiten Walzenpaars 25, 26 weist eine weiche Oberfläche und Ausbuchtungen in Form der vorgesehenen Quernaht auf, während die andere Walze aus einem harten Material wie Stahl besteht. Während des Zusammendrückens werden die Materialbahnen 101, 102 mittels der zweiten Heizeinheit 210 weiter erhitzt. Die Siegelnaht weist nun eine abgeschlossene Form auf. Die Materialbahnen können nun in Querrichtung durchtrennt werden, so dass einzeln verpackte Produkte vorliegen.

In einer möglichen Ausführungsform, dargestellt in Abbildung 4a und 4b, kann mindestens eine Andruckwalze 24 des Walzenpaars so konfiguriert werden, dass sie die jeweiligen flexiblen Materialbahnen nur entlang der Bereiche der vorgesehenen Siegelnaht erhitzt.

Um die flexiblen Materialbahnen entlang der vorgesehenen Siegelnähte zu erhitzen, die anschließend oder währenddessen komprimiert werden sollen, können die Walzen 24 des Walzenpaares an ihrer Außenfläche vorstehende Bereiche 42 aufweisen, die durch elektrische Widerstände erhitzt werden, die von unbeheizten Bereichen 44 umgeben sind.

Die Bereiche 42, für die Erhitzung der Materialbahn, können so geformt sein, dass die Form der Kompressionsbereiche in der durch die Bereiche 42 definierten Form enthalten ist. Gemäß möglichen Ausführungsformen können die zu verpackenden medizinischen Produkte A in mindestens zwei Reihen senkrecht zur Stromrichtung nebeneinander angeordnet sein. In diesem Fall kann, wie in Abbildung 4b gezeigt, mindestens eine der Andruckwalzen 24 auf der Außenfläche mindestens zwei Reihen von beheizten Bereichen 42 aufweisen, die von unbeheizten Bereichen 44 umgeben sind. Die Bereiche 42 können so geformt sein, dass mindestens zwei medizinischen Produkten A gleichzeitig nebeneinander verpackt werden können.

**Patentansprüche**

1.  Verfahren zum Verpacken eines, insbesondere flächig ausgestalteten, medizinischen Produktes (A) umfassend die Schritte:

    a. Bereitstellen zweier flexibler Materialbahnen (101, 102, 103) und eines Produktes (A),
    b. Anordnen des Produktes (A) zwischen den zwei gegenüberliegenden flexiblen Materialbahnen (101, 102, 103), von denen mindestens diejenige Materialbahn einen thermisch aktivierbaren Klebstoff (110, 111, 112) auf ihrer Oberfläche aufweist, die der anderen Materialbahn zugewandt ist,
    c. erstes Erhitzen, insbesondere Vorerhitzen, mindestens eines Teils einer vorgesehenen Siegelnaht mittels mindestens eines Lasers (301, 302),
    d. Zusammendrücken der vorgesehenen Siegelnaht mittels eines Walzenpaars (23, 24), um das Produkt (A) zwischen den Materialbahnen (101, 102, 103) einzuschließen, sowie ein weiteres Erhitzen mindestens einer der Materialbahnen (101, 102, 103) unmittelbar vor dem und/oder während des Zusammendrückens der Materialbahnen (101, 102, 103), wobei das weitere Erhitzen bevorzugt mittels mindestens einer der in dem Walzenpaar (23, 24) enthaltenen Andruckwalzen erfolgt.

2.  Verfahren nach Anspruch 1, wobei die Materialbahnen (101, 102, 103) auf eine Temperatur von 60°C bis 100°C, bevorzugt 70°C bis 90°C, insbesondere 75°C bis 85°C erhitzt oder vorerhitzt werden.

3.  Verfahren nach Anspruch 1 oder 2, wobei das Produkt (A) eine maximale Höhe von 15 mm, bevorzugt 5 mm und insbesondere 2 mm aufweist.

4.  Verfahren nach einem der vorhergehenden Ansprüche, wobei die Materialbahnen (101, 102, 103) in einem Winkel bis 90° zusammengeführt werden, wobei der Winkel bevorzugt höchstens 60°, insbesondere höchstens 30° beträgt.

5.  Verfahren nach einem der vorhergehenden Ansprüche, wobei der Laserstrahl des Lasers (301, 302) auf eine vorherbestimmte Position auf der Materialbahn gerichtet ist und den Klebstoff (110, 111, 112) entlang mindestens eines Teils der vorgesehenen Siegelnaht, die der anderen Materialbahn (101, 102, 103) zugewandt ist, erhitzt, wobei der Laser (301, 302) vorzugsweise zumindest ausgeschaltet ist, wenn keine vorgesehene Siegelnaht der flexiblen Materialbahn (101, 102, 103) unter dem Laser (301, 302) befindlich ist.

6.  Verfahren nach einem der vorhergehenden Ansprüche, wobei der Laserstrahl des Lasers (301, 302) auf eine vorherbestimmte Position auf der Materialbahn gerichtet ist und der Laserstrahl aufgeweitet wird,

    wobei der Laserstrahl bevorzugt die gesamte Breite der Materialbahn (101, 102, 103) überstreicht,
    und wobei ausschließlich die vorgesehene Siegelnaht unter Verwendung einer Maske erhitzt wird, die für den Laserstrahl an Positionen durchlässig ist, die der vorgesehenen Siegelnaht entsprechen.

7.  Verfahren nach einem der vorhergehenden Ansprüche, wobei der Laserstrahl während des ersten Erhitzens dem mindestens einem Teil der vorgesehenen Siegelnaht in einem ersten Heizbereich folgt.

8.  Verfahren nach einem der vorhergehenden Ansprüche, wobei die Leistung des Lasers (301, 302) auf die Breite der Kontur der vorgesehenen Siegelnaht abgestimmt wird, wobei die Laserleistung bevorzugt erhöht wird, wenn die Kontur der vorgesehenen Siegelnaht im vom Laserstrahl überstrichenen Bereich breiter ist.

9.  Verfahren nach einem der vorhergehenden Ansprüche, bei dem die flexiblen Materialbahnen (101, 102, 103) mit einer Geschwindigkeit von 100 bis 250 m/min, bevorzugt 150 bis 250 m/min, insbesondere 180 bis 210 m/min, durch das Walzenpaar (23, 24) laufen.

10. Vorrichtung zum Verpacken eines, insbesondere flächig ausgestalteten, medizinischen Produktes (A) zwischen zwei gegenüberliegenden flexiblen Materialbahnen (101, 102, 103) umfassend:

    - eine Laserheizeinheit (300) umfassend einen Laser (301, 302), der dazu ausgestaltet ist, einen thermisch aktivierbaren Klebstoff (110, 111, 112), der auf zumindest einer Oberfläche mindestens einer flexiblen Materialbahnen (101, 102, 103) aufgebracht ist, zumindest teilweise an oder vor einem Walzenpaar (23, 24) zu erhitzen,

- das Walzenpaar (23, 24), das so konfiguriert ist, dass es die Materialbahnen (101, 102, 103) in einem Kompressionsbereich komprimiert, und

- mindestens eine Heizeinheit (201), die so konfiguriert ist, dass sie mindestens einen Teil der Materialbahn (101, 102, 103) stromaufwärts von dem Walzenpaar (23, 24) oder an dem Walzenpaar (23, 24) erhitzt,

wobei die Heizeinheit (201) bevorzugt ein Teil des Walzenpaars (23, 24) ist.

11. Vorrichtung nach Anspruch 10, wobei das Walzenpaar (23, 24) eine erste Andruckwalze mit einem oder mehreren vorstehenden Kompressionsbereichen aus weichem Material und eine zweite Andruckwalze aus hartem Material umfasst, wobei der eine oder die mehreren vorstehenden Kompressionsbereiche der ersten Andruckwalze vorzugsweise aus einem Elastomer bestehen und/oder die zweite Andruckwalze aus Stahl hergestellt ist.

12. Vorrichtung nach einem der Ansprüche 10 bis 11, wobei der Laser (301, 302) so angeordnet ist, dass der Laserstrahl im Wesentlichen senkrecht zur Oberfläche derjenigen Materialbahn (101, 102, 103) ausgerichtet ist, welche den thermisch aktivierbaren Klebstoff (110, 111, 112) aufweist.

13. Vorrichtung nach einem der Ansprüche 10 bis 12, wobei mindestens eine der Materialbahnen (101, 102, 103) zumindest teilweise transparent für den Laserstrahl ist und wobei der Laser (301, 302) so angeordnet ist, dass der Laserstrahl durch diese Materialbahn (101, 102, 103) hindurch auf den thermisch aktivierbaren Klebstoff (110, 111, 112) trifft.

14. Vorrichtung nach einem Ansprüche 10 bis 13, wobei die Laserheizeinheit (300) mindestens zwei Laser (301, 302) umfasst, die dazu ausgestaltet sind, einen thermisch aktivierbaren Klebstoff (110, 111, 112), der auf zumindest einer Oberfläche mindestens einer der flexiblen Materialbahnen (101, 102, 103) aufgebracht ist, zumindest teilweise vor einem Walzenpaar (23, 24) zu erhitzen.

15. Vorrichtung nach einem der Ansprüche 10 bis 14, wobei der Laser (301, 302) so angeordnet ist, dass der Laserstrahl direkt auf den thermisch aktivierbaren Klebstoff (110, 111, 112) treffen kann.

16. System umfassend eine erste Vorrichtung und eine zweite Vorrichtung nach einem der Ansprüche 10 bis 16, wobei die zwei flexiblen Materialbahnen (101, 102, 103) zunächst in einer stromabwärts laufenden Richtung an der ersten Vorrichtung und danach an der zweiten Vorrichtung vorbeigeführt werden.

300, 301

101

110

201, 24

A

102

23

**Abbildung 1a**

101

24

110

102   A

A

23

**Abbildung 1b**

**Abbildung 2a**

**Abbildung 2b**

**Abbildung 2c**

**Abbildung 2d**

Abbildung 2e

Abbildung 2f

**Abbildung 2g**

**Abbildung 3**

Abbildung 4a

Abbildung 4b

Europäisches Patentamt
European Patent Office
Office européen des brevets

# EUROPÄISCHER RECHERCHENBERICHT

**Nummer der Anmeldung**

EP 24 21 4699

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/034495 A1 (GUALTERI DIEGO [IT] ET AL) 1. Februar 2024 (2024-02-01) | 1-4, 10-14,16 | INV. B65B51/28 |
| A | * Absatz [0090] - Absatz [0114]; Ansprüche 1-10; Abbildung 1b * | 5-9,15 | |
| | ----- | | |
| A | US 2 680 943 A (WILLIAM PETERSEN) 15. Juni 1954 (1954-06-15) * Zusammenfassung; Ansprüche 1-14; Abbildungen 1-10 * | 1-16 | |
| | ----- | | |
| A | EP 0 320 814 B1 (DOTTA GIORGIO) 2. September 1992 (1992-09-02) * Zusammenfassung; Ansprüche 1-11; Abbildungen 1-3 * | 1-16 | |
| | ----- | | |

**RECHERCHIERTE SACHGEBIETE (IPC)**

B65B

Der vorliegende Recherchenbericht wurde für alle Patentansprüche erstellt

| Recherchenort | Abschlußdatum der Recherche | Prüfer |
|---|---|---|
| München | 14. April 2025 | Durucan, Emrullah |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 4699

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2025

| Im Recherchenbericht angeführtes Patentdokument | Datum der Veröffentlichung | Mitglied(er) der Patentfamilie | | Datum der Veröffentlichung |
|---|---|---|---|---|
| US 2024034495 A1 | 01-02-2024 | CN | 116323397 A | 23-06-2023 |
| | | EP | 3984895 A1 | 20-04-2022 |
| | | EP | 4228971 A1 | 23-08-2023 |
| | | US | 2024034495 A1 | 01-02-2024 |
| | | WO | 2022078636 A1 | 21-04-2022 |
| US 2680943 A | 15-06-1954 | KEINE | | |
| EP 0320814 B1 | 02-09-1992 | DE | 3874302 T2 | 24-12-1992 |
| | | EP | 0320814 A2 | 21-06-1989 |
| | | ES | 2034134 T3 | 01-04-1993 |
| | | IT | 1213748 B | 29-12-1989 |
| | | JP | H02140162 A | 29-05-1990 |
| | | US | 4991378 A | 12-02-1991 |

EPO FORM P0461

Für nähere Einzelheiten zu diesem Anhang : siehe Amtsblatt des Europäischen Patentamts, Nr.12/82